# EUROPÄISCHE PATENTSCHRIFT

(11) **EP 2 414 181 B1**
(45) Veröffentlichungstag und Bekanntmachung des Hinweises auf die Patenterteilung: **31.08.2016**
(21) Anmeldenummer: 10710550.4
(22) Anmeldetag: 19.03.2010
(51) Int. Cl.: B60G 13/10, B60G 13/14, B60G 17/044, F16F 9/04, B60G 17/04

(54) **DÄMPFERKOMPRESSOR UND VERFAHREN ZUM ERZEUGEN VON DRUCKLUFT DURCH EINE DÄMPFUNG EINER RELATIVBEWEGUNG ZWISCHEN EINER ACHSE UND EINEM CHASSIS EINES FAHRZEUGS**
DAMPING COMPRESSOR AND METHOD FOR GENERATING COMPRESSED AIR BY DAMPING A RELATIVE MOTION BETWEEN AN AXLE AND A CHASSIS OF A VEHICLE
COMPRESSEUR D'AMORTISSEUR ET PROCÉDÉ DE PRODUCTION D'AIR COMPRIMÉ PAR UN AMORTISSEMENT D'UN MOUVEMENT RELATIF ENTRE UN ESSIEU ET UN CHÂSSIS D'UN VÉHICULE

(30) Priorität: 02.04.2009 DE 102009015939
(43) Veröffentlichungstag der Anmeldung: 08.02.2012
(73) Patentinhaber: KNORR-BREMSE Systeme für Nutzfahrzeuge GmbH, 80809 München (DE)
(72) Erfinder: HERGES, Michael, 80935 München (DE)
(74) Vertreter: Schönmann, Kurt
(86) Internationale Anmeldenummer: PCT/EP2010/001740
(87) Internationale Veröffentlichungsnummer: WO 2010/112146

(56) Entgegenhaltungen:
- EP-A2- 1 249 357
- EP-A2- 1 429 045
- DE-A1- 2 609 392
- DE-A1- 19 855 229

## Beschreibung

Die vorliegende Erfindung bezieht sich auf einen Dämpferkompressor gemäß Anspruch 1 und ein Verfahren zum Erzeugen von Druckluft durch eine Dämpfung einer Relativbewegung zwischen einer Achse und einem Chassis eines Fahrzeugs gemäß Anspruch 15.

Die Reifen von Nutzfahrzeugen werden üblicherweise mit Druckluft versorgt. Meist wird die zur Drucklufterzeugung benötigte Energie heutzutage vom Antriebsmotor mittels eines Kompressors aufgebracht. Bei Nutzfahrzeugen sollte dieser Kompressor also ausreichend Druckluft für die Versorgung der Reifen sowohl des Zugfahrzeugs als auch des Anhängers liefern. In diesem Zusammenhang ist die Tatsache von Bedeutung, dass Nutzfahrzeugreifen oft mit Luftdrücken über 9 bar betrieben werden.

Das Problem der heute hauptsächlich eingesetzten Systeme besteht zum einen darin, dass durch die vom Antriebsmotor zum Betrieb des Kompressors aufzubringende Energie den erreichbaren Gesamtwirkungsgrad stark herabsetzt, d. h. der Wirkungsgrad beträgt nur einige Prozent. Zum anderen kann mit diesen Systemen der Anhänger nur mit Druckluft bis zu 9 bar durch das Zugfahrzeug versorgt werden. Um den richtigen Reifendruck auch im Anhänger zu gewährleisten, werden vermehrt automatische Reifendruckregelsysteme eingesetzt. Diese machen jedoch einen Zusatzaufwand zur Druckerhöhung erforderlich.

Gleichzeitig sollte bei Betrieb eines Nutzfahrzeugs das Fahrwerk des Fahrzeugs gedämpft werden, um eine sichere Fahrbahnhaftung zu gewährleisten. Hier ist die Funktionsweise derzeit eingesetzter Systeme mit der Umwandlung von Bewegungsenergie in Wärme gleichzusetzen.

Ein im Stand der Technik bekannter Ansatz benutzt einen pneumatischen Booster, um den Druck für ein Reifendruckregelsystem zu erhöhen. Der Einsatz eines solchen Boosters bzw. Luftmengen-/ Luftdruckverstärkers verschlechtert jedoch den Wirkungsgrad eines solchen Systems weiter.

Die DE 19855229 A1 zeigt eine Federung, insbesondere für muskelkraftbetriebene Fahrzeuge, mit wenigstens einem Federbalg, der zwischen zwei mit dem Fahrzeugrahmen in Verbindung stehenden Endstücken zwischengesetzt ist, und einer Membranpumpe, die mit Rückschlagventilen versehen ist, die jeweils in Druck- und Ansaugleitung der Pumpe in einem Endstück zur Erhöhung des Innendruckes des in dem Federbalg befindlichen Mediums vorgesehen sind.

Die DE 2609392 A1 zeigt eine Niveau-Regeleinrichtung, insbesondere für Fahrzeuge, mit mindestens einer Feder und einem damit zusammenwirkenden Gas- oder Flüssigkeitsdämpfer, dessen Arbeitsmittel unter der Wirkung der Feder steht.

Die EP 1 429 045 A2 zeigt eine Luftfederanordnung eines Fahrzeuges, umfassend eine erste und zweite Luftfeder, die parallel geschaltet sind.

Die EP 1 249 357 A2 offenbart einen pneumatischen selbst-nivellierenden Suspensionsdämpfer.

Es ist daher die Aufgabe der vorliegenden Erfindung, eine verbesserte Vorrichtung zur Erzeugung von Druckluft in einem Fahrzeug zu schaffen.

Diese Aufgabe wird durch einen Dämpferkompressor gemäß Anspruch 1 sowie ein Verfahren gemäß Anspruch 14 gelöst.

Der vorliegenden Erfindung liegt der Gedanke zugrunde, dass Vibrationen des Fahrzeugs zu einer relativen Hubbewegung zwischen Chassis und Achse führen, die auf zwei Elemente eines Dämpfers (beispielweise einem Stoßdämpfer) des Fahrzeugs übertragen werden. Diese relative Hubbewegung der beiden Elemente kann im Dämpferkompressor dazu genutzt werden, ein Luftvolumen zwischen den Elementen zu verändern und damit Druckluft zu erzeugen. Insbesondere ist es mit dem vorgeschlagenen Ansatz möglich, dass der Nulldurchgang der Elemente beim Ein- und Ausfedern eine Mittellage bzw. Ruhelage definiert, in der ein Luftvolumen zwischen den Elementen minimal bzw. nicht vorhanden ist. Dadurch wird ein Totraum zwischen den Elementen minimiert und somit bei annähernd jedem Ein- und/oder Ausfederungshub eine Pumpwirkung erzielt, wodurch der Wirkungsgrad eines solchen Kompressors maximiert werden kann.

Vorteilhafterweise ist es möglich, dass durch die Nutzung der bei einer Dämpfung frei werdenden Energie Druckluft erzeugt und somit Kraftstoff eingespart werden kann, der zum Betrieb eines Kompressors zur Drucklufterzeugung mittels des Antriebsmotors benötigt würde. Bei einer solchen Kombination aus Dämpfer und Kompressor erübrigt sich auch der Einsatz von einem separaten (z.B. hydraulischen) Dämpfer und einem separaten Kompressor, wodurch sich die Herstellungskosten bei Einsatz des vorgeschlagenen Ansatzes reduzieren lassen. Ein weiterer Vorteil ist dadurch gegeben, dass sich der Dämpfer nicht so stark erwärmt, da der größte Teil der Dämpferenergie nicht in Wärme umgewandelt sondern als Druckluft gespeichert wird. Da das hier vorgeschlagene System insbesondere auch im Anhänger eines Nutzfahrzeugs einsetzbar ist, kann ein weitgehend beliebiges Druckniveau in Komponenten des Anhängers unabhängig vom Zugfahrzeug eingestellt werden. Sogar eine völlige oder zumindest teilweise Druckluftversorgung des Zugfahrzeugs durch Komponenten des Anhängers ist möglich. Dies bedeutet, dass unter Umständen auf den Kompressor im Zugfahrzeug ganz verzichtet werden kann oder er zumindest vereinfacht und/oder verkleinert werden kann. Auf diese Weise kann der Dämpferkompressor vorteilhaft als redundantes Sicherungssystem für den Zugfahrzeugkompressor und somit zur Erhöhung der Ausfallsicherheit des Zugkompressors verwendet werden. Da die für die Drucklufterzeugung zu verwendende Luft vorzugsweise aus einem mit dem Dämpferkompressor verbindbaren Zwischenspeicher entnommen wird, ist durch eine Veränderung des Luftdrucks in einem derartigen Zwischenspeicher auch eine variable Dämpfung durch unterschiedlich einstellbare Druckniveaus möglich. Da bei diesem System zur Drucklufterzeugung hauptsächlich die in einem Stoßdämpfer ohnehin eingesetzten Bauteile zur Verwendung kommen und kaum zusätzliche Elemente benötigt werden, können Aufbau und Struktur des hier vorgeschlagenen Ansatzes einfach gehalten werden. Eine Nutzung der durch die Dämpfung eines Fahrzeugs entstandenen Energie zur Erzeugung von Druckluft ist also sowohl ökonomisch als auch ökologisch sehr sinnvoll.

Auf die allgemeine Funktionsweise eines Kompressors wird später noch genauer eingegangen.

Die vorliegende Erfindung schafft somit einen Dämpferkompressor, der zum Erzeugen von Druckluft durch eine Dämpfung einer Relativbewegung zwischen einer Achse und einem Chassis eines Fahrzeugs ausgebildet ist.

Gemäß einer speziellen Ausführungsform der Erfindung weist der Dämpferkompressor die folgenden Merkmale auf:
eine Kompressoranordnung, die ein erstes und ein zweites Element umfasst, wobei das erste Element mit der Achse oder dem Chassis des Fahrzeugs verbindbar ist und das zweite Element mit dem anderen des Chassis oder der Achse des Fahrzeugs verbindbar ist, wobei die Anordnung ausgebildet ist, um bei einer relativen Hubbewegung zwischen dem ersten und zweiten Element ein Luftvolumen zwischen diesen Elementen zu verändern, um die Druckluft zu erzeugen und wobei die Kompressoranordnung ferner in einer Ruhelage ein Minimum des Luftvolumens oder kein Luftvolumen zwischen dem ersten und zweiten Element aufweist;
ein Mitnehmerelement, das ausgebildet ist, um bei einer Relativbewegung zwischen der Achse und dem Chassis durch Mitnahme des ersten Elementes in eine Hubrichtung eine Luftvolumenvergrößerung zu bewirken; und
ein Rückstellelement, das ausgebildet ist, um das erste Element entgegen der Hubrichtung zu bewegen, wodurch eine Luftvolumenreduzierung bewirkt und die Druckluft aus der Kompressoranordnung ausgefördert wird.

Eine derartige Ausführungsform der Erfindung bietet den Vorteil, dass durch die Verwendung von zwei Elementen, die relativ zueinander bewegt werden können, für beide Elemente eine Ruhelage erreicht werden kann, in der ein Luftvolumen zwischen den Elementen gegen Null tendiert. Hierdruch kann ein maximaler Wirkungsgrad des erfindungsgemäßen Ansatzes erzielt werden. Die beiden verwendeten Elemente können zwei bewegliche Kolben sein, die als Druck erzeugender Kolben und als Gegenkolben wirken. Alternativ können auch eine Behälterwand bzw. ein Behälterboden in Verbindung mit einem beweglichen Kolben als ersten und zweites Element der Dämpferanordnung verwendet werden. Das Rückstellelement ermöglicht auf einfache Art und Weise, dass das erste Element sicher die Ruhelage wieder erreichen kann.

Gemäß einer weiteren Ausführungsform der Erfindung kann das Mitnehmerelement ausgebildet sein, um bei einer weiteren Relativbewegung zwischen der Achse und dem Chassis durch Mitnahme des zweiten Elementes in eine der Hubrichtung entgegengesetzte Richtung eine Luftvolumenvergrößerung zu bewirken, wobei der Dämpferkompressor ein weiteres Rückstellelement aufweist, das ausgebildet ist, um das zweite Element in die Hubrichtung zu bewegen, wodurch eine Luftvolumenreduzierung bewirkt und die Druckluft aus der Kompressoranordnung ausgefördert wird. Eine derartige Ausführungsform der Erfindung bietet den Vorteil einer kontinuierlichen Ausnutzung des vorgeschlagenen Prinzips der Drucklufterzeugung, da auf den Hub des einen Elements direkt der Hub des zweiten Elements folgt, der sofort erneut eine Druckluftgewinnung einleitet. Somit kann auch eine zur Hubrichtung gegenläufige Bewegung des Mitnehmerelements über die Ruhelage eines der Elemente hinaus, d.h. eine Bewegung in Hubrichtung und eine Bewegung entgegen der Hubrichtung, zur Drucklufterzeugung ausgenutzt werden. Dies führt zu einer deutlichen Erweiterung der Drucklufterzeugungsmöglichkeit und somit zu einer Verbesserung des Wirkungsgrades des hier vorgeschlagenen Ansatzes.

Gemäß einer weiteren Ausführungsform der Erfindung kann das Mitnehmerelement stabförmig mit einer Verdickung ausgebildet sein, wobei die Verdickung derart an dem stabförmigen Element angeordnet sein kann, dass die Verdickung zwischen dem ersten und zweiten Element angeordnet ist. Dies ermöglicht vorteilhaft eine gegensinnige Bewegung der zwei Elemente mit lediglich einem Mitnehmerelement, das zudem durch die stabförmige Ausprägung angesichts der auftretenden Zug- und Druckkräfte besonders biegefest ist.

Gemäß einer weiteren Ausführungsform der Erfindung ist das Mitnehmerelement zumindest durch das erste und/oder zweite Element durchgeführt. Das erste und/oder zweite Element wird bzw. die Elemente werden also entlang der Bewegungsachse des erfindungsgemäßen Dämpferkompressors geführt, wodurch eine Relativbewegung zwischen dem Chassis und der Achse in einer möglichst großen Hubbewegung des ersten Elementes in Bezug zum zweiten Element resultiert.

Das Rückstellelement und/oder das weitere Rückstellelement können gemäß einer weiteren Ausführungsform eine Feder sein. Dies bietet den Vorteil, dass technisch bereits gut ausgereifte und breit verfügbare Elemente eingesetzt werden können, die kostengünstig zur Verfügung stehen.

Gemäß einer weiteren Ausführungsform der Erfindung weist der Dämpferkompressor ein Einlassventil auf, das ausgebildet ist, um bei der relativen Hubbewegung Luft aus einer äußeren Umgebung des Dämpferkompressors und/oder einem Luftbehälter, insbesondere einem Federbalg, in das Luftvolumen zwischen dem ersten und zweiten Element einzulassen. Die Entnahme der Luft aus dem Luftbehälter weist den Vorteil auf, dass bereits gereinigte und getrocknete Luft zur Verfügung steht und einfach und effizient weiterverwendet werden kann. Die Entnahme der Luft aus der äußeren Umgebung des Dämpferkompressors weist den Vorteil auf, dass es möglich ist, eine von der Luftversorgung des Zugfahrzeugs unabhängige Druckluftversorgung beispielsweise für Reifen zur Verfügung zu stellen oder sogar die Druckluftversorgung des Zugfahrzeugs übernehmen zu können.

Bei Ausgestaltung der Erfindung in der Form, dass die für die Änderung des Luftvolumens zwischen den zwei Elementen verwendete Luft direkt aus der Atmosphäre angesaugt wird, wird sie vor der Verwendung vorzugsweise gereinigt, da sie Schmutz und Wasser enthalten kann. Schmutz kann über ein geeignetes Luftfilter in Strömungsrichtung vor dem Dämpferkompressor entfernt werden. Zur Lufttrocknung gibt es verschiedene Möglichkeiten, wobei die erste Möglichkeit darin bestehen kann, dass die zunächst auf einen deutlich höheren Druck als den vom Verbrauchersystem benötigten komprimiert und in einem Zwischenbehälter gelagert werden kann. Hier kühlt sie ab, wodurch das darin enthaltene Wasser kondensiert und über ein manuell oder automatisch wirkendes Ablassventil abgelassen werden kann. Von dem Zwischenbehälter aus kann die Luft über ein Druckreglerventil auf den vom Verbrauchersystem benötigten Druck entspannt und zum Verbrauchersystem geleitet werden. Durch die Druckverminderung sinkt die relative Luftfeuchte. Durch dieses Vorgehen ist es auch möglich, durch Variation des Druckes im Zwischenspeicher die Dämpferwirkung zu beeinflussen. Dieses Vorgehen hat zwar einen relativ geringen Wirkungsgrad, jedoch steht im Allgemeinen ohnehin weit mehr Dämpferenergie zur Verfügung als für die Luftversorgung zur Erzeugung von Druckluft benötigt wird. Gemäß einer anderen Ausführungsform kann ein konventioneller Lufttrockner nachgeschaltet werden, der von Zeit zu Zeit regeneriert wird. Als weitere Alternative kann ein kontinuierlich wirkender Membrantrockner nachgeschaltet werden.

Die für die Volumenänderung zwischen den Elementen zu verwendende Luft kann vorzugsweise aus einem vom Zugfahrzeug belieferten Reservoir angesaugt werden. Sie sollte dann nur noch auf den höheren Versorgungsdruck beispielsweise für das Reifendruckregelsystem nachverdichtet werden. Da die Luft bereits vom Zugfahrzeug aufbereitet wurde, ist eine Trocknung oder Reinigung dann nicht mehr nötig.

Gemäß einer anderen Ausführungsform kann die Luft auch aus einem Niederdruckreservoir angesaugt werden, das die von anderen Systemen, wie beispielsweise Luftfederung, Bremse oder Reifen, abgelassene Luft, die ursprünglich vom Zugfahrzeug geliefert worden war, in einem geschlossenes System sammelt. Auch hier wird die Luft bereits vom Zugfahrzeug aufbereitet. Eine Trocknung oder Reinigung ist nicht mehr erforderlich.

Selbstverständlich ist auch eine Kombination der vorstehend genannten Möglichkeiten zur Luftansaugung denkbar, so dass einerseits Luft aus der Atmosphäre angesaugt werden kann, andererseits aber auch Luft durch ein vom Zugfahrzeug beliefertes Reservoir bereitgestellt werden kann oder Luft aus einem Niederdruckreservoir bereitgestellt werden kann.

Gemäß einer weiteren Ausführungsform der Erfindung weist der Dämpferkompressor ein Auslassventil in dem ersten und/oder zweiten Element auf, das ausgebildet ist, um die Druckluft in einen Druckluftspeicher auszustoßen. Insbesondere kann das Auslassventil als Rückschlagventil wie beispielsweise ein Lamellenventil ausgebildet sein. Dies bietet den Vorteil, dass das Luftvolumen zwischen dem ersten und zweiten Element möglichst klein gehalten werden kann, da die erzeugte Druckluft unter Beibehaltung des erzeugten Drucks durch das erste und/oder zweite Element aus dem Luftvolumen entweichen kann.

Gemäß einer weiteren Ausführungsform der Erfindung ist der Druckluftspeicher zur Bereitstellung von Druckluft ausgebildet, um das erste Element entgegen der Hubrichtung zu bewegen und/oder das zweite Element in Hubrichtung zu bewegen, wodurch eine Luftvolumenreduzierung bewirkt und die Druckluft erzeugt wird. Auf diese Weise kann die Druckluft im Druckluftspeicher vorteilhaft zur Dämpfung der Relativbewegung der Achse in Bezug zum Chassis eingesetzt werden.

Gemäß einer weiteren Ausführungsform der Erfindung werden das erste und zweite Element durch je einen Kolben gebildet. Der Vorteil hierbei ist darin zu sehen, dass zwei nahezu baugleiche Elemente zur Drucklufterzeugung verwendet werden können. Weiterhin ermöglicht eine derartige Konfiguration eine technisch sehr einfache Drucklufterzeugung sowohl beim Ein- als auch beim Ausfedem.

Gemäß einer weiteren Ausführungsform der Erfindung weist der Dämpferkompressor ein Führungselement auf, das ausgebildet ist, um das erste und zweite Element bei einer Relativbewegung zwischen der Achse und dem Chassis aufzunehmen und zu führen, wobei das Führungselement an einer Innenwand zumindest einen Absatz aufweist, an dem das ersten und zweite Element in der Ruhelage anliegen. Das Führungselement kann beispielsweise ein Zylinder sein, in dem sich das erste und/oder zweite Element bewegen. Durch eine derartige Ausführungsform der Erfindung kann eine Führung des ersten und/oder zweiten Elements entlang der Bewegungsachse des Dämpferkompressors unterstützt werden. Die Verwendung eines solchen, technisch einfach herzustellenden Absatzes bietet den Vorteil, dass durch seine Verwendung die Ruhelage einfach definiert werden kann und in Kombination mit den Rückstelielementen in der Ruhelage ein gegen Null tendierendes Volumen zwischen dem ersten und zweiten Element erzielt werden kann.

Gemäß einer alternativen Ausführungsform der Erfindung werden das erste und zweite Element durch je einen Zylinder gebildet, wobei die Zylinder ineinander angeordnet sind und der Boden des innen angeordneten Zylinders als Kolben wirkt.

Eine derartige Anordnung bietet den Vorteil einer einfachen Wartungsmöglichkeit bei der gegebenenfalls die Zylinder leichter ausgetauscht werden können.

Gemäß einer alternativen Ausführungsform der Erfindung weist der Dämpferkompressor ein Führungselement auf, das ausgebildet ist, um das erste und zweite Element bei einer Relativbewegung zwischen der Achse und dem Chassis aufzunehmen und zu führen, wobei der innen angeordnete Zylinder eine Halteeinheit aufweist, die ausgebildet ist, um an einer äußeren Oberfläche des Führungselements aufzusetzen, um die Ruhelage des innen angeordneten Zylinders zu definieren, und wobei der außen angeordnete Zylinder eine Zylinderwand aufweist, die ausgebildet ist, um an einer Innenwand des Führungselements aufzusetzen, um die Ruhelage des außen angeordneten Zylinders zu definieren. Eine derartige Ausführungsform weist den Vorteil auf, dass auf einfache Art und Weise die Ruhelage sowohl für den inneren als auch für den äußeren Zylinder präzise definiert werden kann.

Gemäß einer weiteren Ausführungsform der Erfindung ist eine Länge des Mitnehmerelements, insbesondere durch einen elektrischen Spindeltrieb und/oder ein hydraulisches Zwischenelement, einstellbar. Vorteilhafterweise kann so eine Ruhelage für das erste und/oder zweite Element auch dann eingestellt werden, wenn keine Luftfederung oder eine andere Federung des Nutzfahrzeugs zum Einsatz kommt, durch die die Ruhelage fest eingestellt werden kann.

Die vorliegende Erfindung schafft femer ein Verfahren zum Erzeugen von Druckluft durch eine Dämpfung einer Relativbewegung zwischen einer Achse und einem Chassis eines Fahrzeugs, wobei das Verfahren eine Kompressoranordnung verwendet, die ein erstes und ein zweites Element umfasst, wobei das erste Element mit der Achse oder dem Chassis des Fahrzeugs verbindbar ist und das zweite Element mit dem anderen des Chassis oder der Achse des Fahrzeugs verbindbar ist, wobei die Kompressoranordnung ausgebildet ist, um bei einer relativen Hubbewegung zwischen dem ersten und zweiten Element ein Luftvolumen zwischen diesen Elementen zu verändern, um die Druckluft zu erzeugen, wobei die Kompressoranordnung ferner in einer Ruhelage ein Minimum des Luftvolumens oder kein Luftvolumen zwischen den Elementen aufweist und wobei das Verfahren die folgenden Schritte umfasst:
Vergrößern des Luftvolumens bei einer Relativbewegung zwischen der Achse und dem Chassis durch Mitnahme des ersten Elementes in eine Hubrichtung; und
Bewegen des ersten Elementes entgegen der Hubrichtung, wodurch eine Luftvolumenreduzierung bewirkt und die Druckluft aus der Kompressoranordnung ausgefördert wird.

Auch durch diese Ausführungsvariante der Erfindung in Form eines Verfahrens kann die der Erfindung zugrunde liegende Aufgabe schnell und effizient gelöst werden.

Einige Ausführungsbeispiele der vorliegenden Erfindung werden nachfolgend Bezug nehmend auf die beiliegenden Zeichnungen näher erläutert. Es zeigen:
- Fig. 1A: eine Schnittansicht eines ersten Ausführungsbeispiels des erfindungsgemäßen Dämpferkompressors entlang einer Längsachse, wobei sich ein erstes und ein zweites Element der Kompressoranordnung in einer Ruhelage befinden;
- Fig. 1 B: eine Ansicht eines vergrößerten Teilausschnitts der Fig. 1A;
- Fig. 2A: eine weitere Schnittansicht entlang der Längsachse eines Ausführungsbeispiels des erfindungsgemäßen Dämpferkompressors, wobei sich das erste Element der Kompressoranordnung in einer Arbeitsposition befindet und das zweite Element der Kompressoranordnung in der Ruhelage befindet;
- Fig. 2B: eine Ansicht eines vergrößerten Teilausschnitt der Fig. 2A;
- Fig. 3: eine weitere Schnittansicht entlang der Längsachse eines Ausführungsbeispiels des erfindungsgemäßen Dämpferkompressors, wobei sich das erste Element der Kompressoranordnung wieder in der Ruhelage befindet und Druckluft durch ein Auslassventil in dem ersten Element aus dem Luftvolumen zwischen dem ersten und dem zweiten Element ausgestoßen wird;
- Fig. 4: eine weitere Schnittansicht entlang der Längsachse eines Ausführungsbeispiels des erfindungsgemäßen Dämpferkompressors, wobei sich das erste Element der Kompressoranordnung in der Ruhelage befindet und das zweite Element der Kompressoranordnung in einer Arbeitsposition befindet;
- Fig. 5: eine weitere Schnittansicht entlang einer Längsachse eines alternativen Ausführungsbeispiels des erfindungsgemäßen Dämpferkompressors, wobei sich ein erstes und ein zweites Element einer Kompressoranordnung in einer Ruhelage befinden;
- Fig. 6: eine weitere Schnittansicht entlang der Längsachse eines Ausführungsbeispiels des erfindungsgemäßen Dämpferkompressors; und
- Fig. 7: ein Ablaufdiagramm eines Ausführungsbeispiels eines erfindungsgemäßen Verfahrens.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird. Die beschriebenen Ausführungsbeispiele sind nur beispielhaft gewählt und können miteinander kombiniert werden.

Nachfolgend wird die Funktionsweise eines Ausführungsbeispiels des erfindungsgemäßen Dämpferkompressors allgemein erläutert:
Zwischen Chassis und Achse eines Fahrzeugs bzw. zwischen Elementen, die mit dem Chassis oder der Achse verbunden sind, kann ein veränderliches Luftvolumen so angeordnet werden, dass eine Veränderung des Abstandes zwischen Achse und Chassis eine Veränderung des Luftvolumens bewirkt. Diese Volumenänderung wirkt als Kompressor. Da Luft ein kompressibles Medium ist, sollte zur Erzeugung von Druckluft die angesaugte Luft zunächst auf den gewünschten Enddruck verdichtet und dann aus dem Kompressorraum ausgestoßen werden. Am Ende eines solchen Zyklus' sollte das verbleibende Volumen im Kompressor minimiert werden, da die dort verbleibende Luft nicht gefördert - also ausgestoßen - wird, sondern im Kompressorvolumen verbleibt. Wenn man von einem Verdichtungsverhältnis von z.B. 1:12 ausgeht, so sollte in grober Näherung zunächst das Volumen auf 1/12-tel verkleinert werden, bevor überhaupt eine Luftförderung einsetzt. Wäre also das minimal erreichbare Kompressorvolumen z.B. 1/24-tel des maximalen Volumens, so würde nur die Hälfte der verdichteten Luft auch gefördert. Der Rest würde sich bei einer nachfolgenden Expansion des Kompressorvolumens wieder entspannen. Wäre das minimal erreichbare Kompressorvolumen z.B. nur 1/10-tel des maximalen Volumens, so würde überhaupt keine Druckluft gefördert. Da der Hub der Ein- und Ausfederung beim Fahren von Faktoren wie Fahrzeuggeschwindigkeit, Straßenzustand, Reifenbeschaffenheit und anderen abhängt, ist er keine feste Größe. Jedoch wechseln sich immer Ein- und Ausfederphasen ab, es gibt also immer einen "Nulldurchgang", d.h. die Bewegung durchläuft nahezu immer einen mittleren Abstand zwischen Achse und Chassis. In einem besonders günstigen Ausführungsbeispiel ist der Kompressor derart ausgeführt, dass in dieser Mittellage bzw. Ruhelage, also bei dem Abstand, der sich beim stehenden Fahrzeug ergibt, bzw. der sich als statistischer, mittlerer Abstand während der Fahrt einstellt, das Kompressorvolumen gegen Null tendiert. Jede Vergrößerung und/oder Verkleinerung dieses Abstandes (also beim Ein- und/oder Ausfedern) vergrößert dieses Volumen und es wird Luft aus der Atmosphäre oder einem anderen Raum angesaugt. Vor jedem "Nulldurchgang" wird verdichtete Luft gefördert. Dies funktioniert zumindest immer dann, wenn die Volumenvergrößerung durch das Ein- oder Ausfedern größer ist, als das Minimalvolumen multipliziert mit dem Verdichtungsverhältnis. Das Minimalvolumen kann auch als "Totraum" bezeichnet werden. Wird der Totraum konsequent minimiert, so wird eine Pumpwirkung bei annähernd jedem Ein- und/oder Ausfederungshub erzielt. Beim Komprimieren der Luft wird Kraft entgegen dem Ein- oder Ausfederungsweg (also Energie) benötigt und somit aus der Vertikalbewegung entnommen. Diese Entnahme von Energie aus der Vertikalbewegung wirkt als Dämpfung der Bewegung. Auch beim Ansaugen wird Energie aufgebracht, die die Dämpfungswirkung erhöht. Diese Energie wird bei dem oben vorgestellten Ausführungsbeispiel also nicht, wie bei einem konventionellen Dämpfer, in Wärme umgewandelt, sondern in Form von Druckluft gespeichert.

Die Dämpferwirkung ist sowohl von der Volumenänderung, die pro Federweg möglich ist, als auch von der Höhe des Drucks abhängig, der zur Drucklufterzeugung bereitgestellt werden kann. Somit kann die Dämpferwirkung prinzipiell durch Variation des Drucks einfach an unterschiedliche Fahrzustände wie Geschwindigkeit, Beladung, Fahrbahnzustand, usw. angepasst werden.

Das grundsätzliche Konstruktionsprinzip eines günstigen Ausführungsbeispiels des erfindungsgemäßen Dämpferkompressors lässt sich wie folgt beschreiben:
Eine Kolben-Zylinder-Anordnung ist zwischen Chassis und Achse eines Fahrzeugs angeordnet bzw. ein Teil der Anordnung ist mit dem Chassis, der andere mit der Achse des Fahrzeugs verbunden. In dieser Anordnung bildet sich in einer Nulllage der Achsaufhängung bzw. Ruhelage zwischen der Achse und dem Chassis in der Kolben-Zylinder-Anordnung ein gegen Null tendierendes Luftvolumen. Beim Ein- und/oder Ausfedern bewegen sich die Teile so gegeneinander, dass sich dazwischen eine Volumenvergrößerung ergibt und über ein Ventil (z.B. eine automatisch wirkende Rückschlagventilanordnung) Luft angesaugt wird. Bei der nächsten gegensinnigen Bewegung der Achse in Bezug zum Chassis wird das Volumen wieder verkleinert, wobei die zuvor angesaugte Luft zunächst verdichtet und dann bei Annäherung an die Nulllage über ein Ventil (z.B. eine automatisch wirkende Rückschlagventilanordnung wie ein Lamellenventil) ausgestoßen wird.

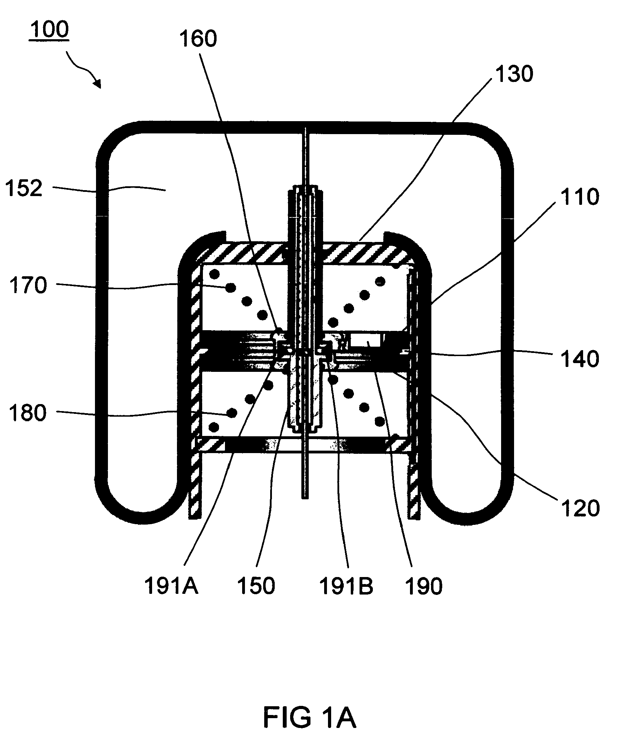

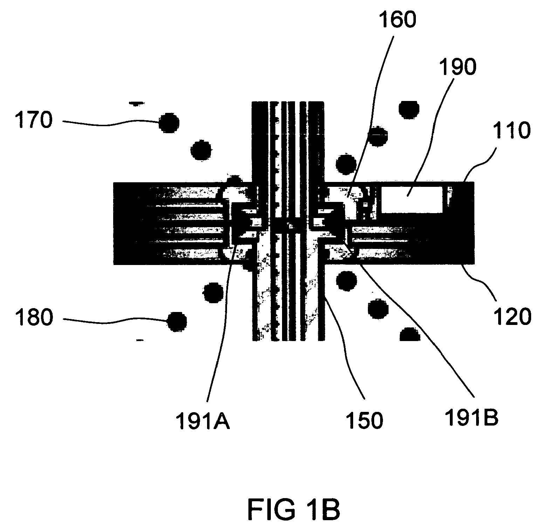

Um die Erfindung detaillierter zu beschreiben, wird ein vorteilhaftes Ausführungsbeispiel der vorliegenden Erfindung anhand der nachfolgend genannten Figuren 1 bis 4 näher beschrieben. Fig. 1A zeigt dabei eine Schnittansicht entlang einer Längsachse eines Ausführungsbeispiels eines erfindungsgemäßen Dämpferkompressors 100. Der Dämpferkompressor 100 weist eine Kompressoranordnung mit einem ersten Element 110 und einem zweiten Element 120 auf. Dabei können beide Elemente beispielsweise Kolben sein (wie dies in den nachfolgenden Figuren dargestellt ist) oder es kann eines der Elemente beispielsweise ein Kolben und das andere der Elemente beispielsweise ein Zylinderboden sein, wenn die Drucklufterzeugung nur beim Einfedern bzw. beim Ausfedern erzeugt werden soll (was in den Ausführungsbeispiel in den Figuren 1 bis 4 jedoch nicht weiter beschrieben wird). Das erste Element 110 kann mit einer Achse oder einem Chassis eines Fahrzeugs und das zweite 120 Element mit dem anderen der Achse oder des Chassis des Fahrzeugs verbunden sein. Das erste 110 und zweite 120 Element können in einem Führungselement 130 angeordnet sein, das an einer Innenwand mindestens einen Absatz 140 bzw. Vorsprung, besser jedoch zwei Absätze an gegenüberliegenden Stellen an der Innenwand aufweisen kann, an dem/denen das erste 110 und/oder das zweite 120 Element in einer Ruhelage anliegt/anliegen. Die Elemente 110 und 120 können derart in dem Führungselement 130 aufgenommen sein, dass ein Umfangsrand der Elemente 110 und 120 einen fluiddichten Abschluss gegenüber der Innenwand des Führungselements 130 bildet. In der Darstellung aus Fig. 1A ist ersichtlich, dass ein stabförmiges Mitnehmerelement 150 vorgesehen ist, das eine zwischen den Elementen 110 und 120 angeordnete Verdickung 160 aufweist, wobei das Mitnehmerelement in den Dämpferkompressor 100 ragt und das erste 110 und/oder zweite 120 Element durchstößt. Das Mitnehmerelement 150 kann dabei über einen Federbalg 152 mit dem Chassis verbunden sein, während das Führungselement 130 mit der Achse des Nutzfahrzeugs verbunden sein kann. Ein Rückstellelement 170 (das in dem Ausführungsbeispiel gemäß Fig. 1A als Spiralfeder ausgebildet ist) kann in einer Ruhelage das erste Element 110 an den zumindest einen Absatz 140 gedrückt halten, und ein weiteres Rückstellelement 180 (das in dem Ausführungsbeispiel gemäß Fig.1 A ebenfalls als Spiralfeder ausgebildet ist) kann in einer Ruhelage das zweite Element 120 an den zumindest einen Absatz 140 von einer gegenüberliegenden Seite gedrückt halten. Das Zusammenwirken der Elemente 110 und 120, des zumindest einen Absatzes 140 und der Rückhalteelemente 170 und 180 stellt in der Ruhelage der Elemente 110 und 120 ein gegen Null tendierendes Volumen bzw. einen gegen Null tendierenden Totraum zwischen den Elementen 110 und 120 her. In dem ersten Element 110 und/oder in dem zweiten Element 120 kann ein Auslassventil 190 angeordnet sein, das ein Ausstoßen von zuvor angesaugter und komprimierter Luft ermöglicht. Bei dem in Fig. 1A gezeigten Ausführungsbeispiel ist das Auslassventil 190 lediglich in dem ersten Element 110 angeordnet. An der Verdickung 160 sind ein erstes 191A und zweites 191 B Einlassventil angeordnet, über die während einer Hubbewegung des ersten Elements 110 und/oder des zweiten Elements 120 Luft aus einer äußeren Umgebung (beispielsweiseaus dem Federbalg 152 über eine Führungsschiene des Mitnehmerelementes 150) in das Luftvolumen zwischen dem ersten Element 110 und dem zweiten Element 120 eingelassen werden kann.

Fig. 1B zeigt eine vergrößerte Darstellung eines Teilausschnitts der Fig. 1A, insbesondere ist aus Fig. 1B die Anordnung der Einlassventile 191A und/oder 191 B und des Auslassventils 190 besser zu erkennen.

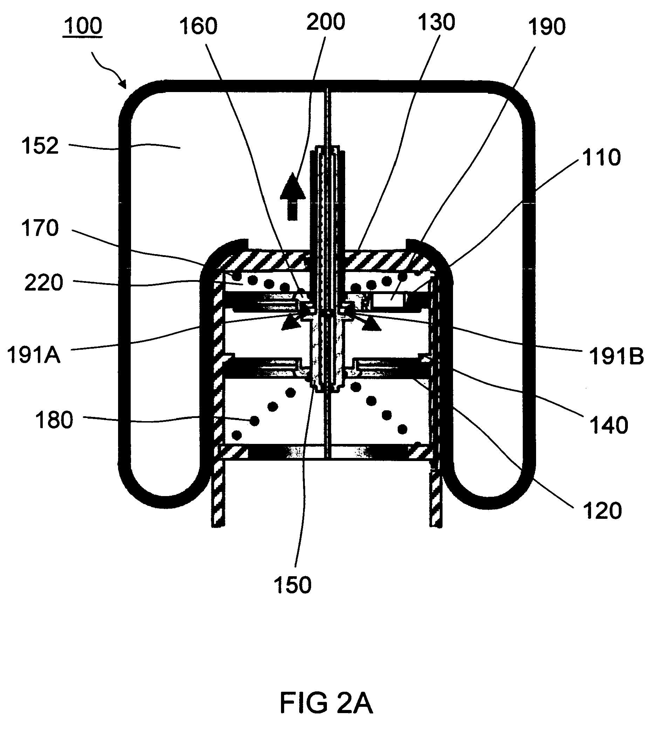

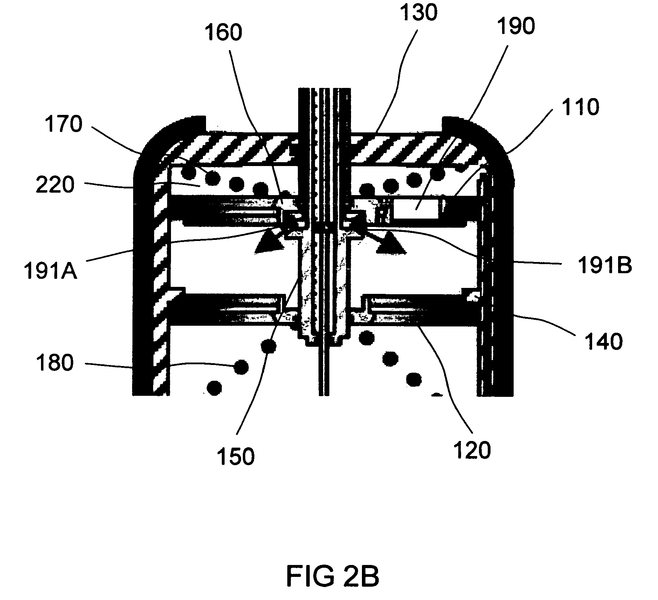

Fig. 2A zeigt eine analoge Darstellung zu Fig. 1A, wobei hier das erste Element 110 in einer Arbeitsposition gezeigt ist. Wie aus der Darstellung der Fig. 2A ersichtlich ist, bewirkt eine relative Hubbewegung zwischen Chassis und Achse des Fahrzeugs, dass die Verdickung 160 das Element 110 in einer bestimmten Hubrichtung 200 mitnimmt. Aufgrund des nun entstehenden Unterdrucks zwischen den Elementen 110 und 120 wird Luft aus einem Außenraum, vorzugsweise dem Federbalg 152 (oder über einen in den genannten Figuren nicht dargestellten Ansaugschlauch aus der Atmosphäre oder einem weiteren Luftreservoir) durch ein erstes Einlassventil 191A und/oder ein zweites Einlassventil 191 B in das Luftvolumen bzw. den Raum zwischen den Elementen 110 und 120 angesaugt. Die Einlassventile 191A, 191 B sind vorzugsweise durch eine Rückschlagventilanordnung, beispielsweise einen Gummiring mit radial wegklappbaren Lippen, gebildet. Dies ist in Fig. 2B vergrößert dargestellt. Auch die Verwendung nur eines derartigen Einlassventils ist möglich.

Die Hubbewegung des ersten Elementes 110 nach oben führt zu einer Kompression eines Gases in dem Raum 220 über dem ersten Element 110 und dem Führungselement 130, wodurch eine Druckerhöhung in diesem Raum 220 des Führungselements 130 resultiert. Entgegen der Darstellung aus den Fig. 2A und 2B, kann ein durch die Hubbewegung des ersten Elementes 110 resultierendes Minimum des Raums 220 größer als ein Maximum des Luftvolumens zwischen den Elementen 110 und 120 sein.

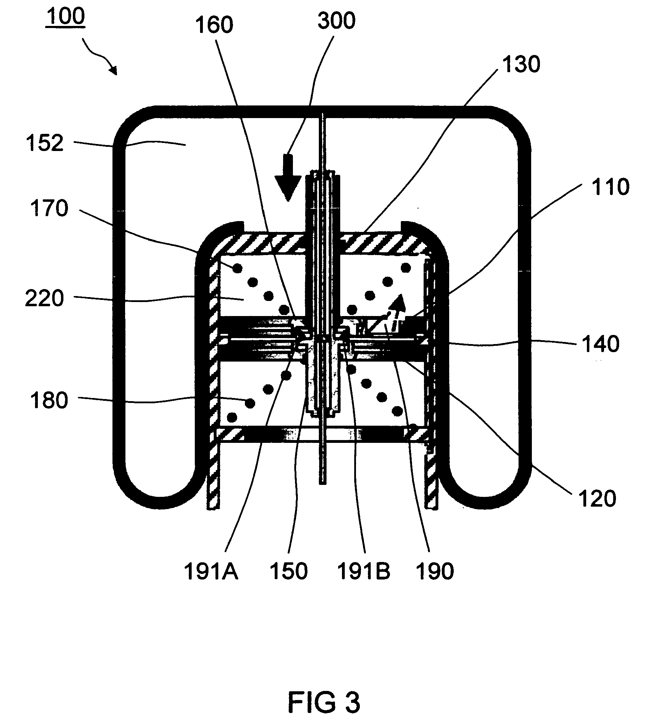

In einem Arbeitsschritt, der auf den in Fig. 2A und 2B dargestellten Arbeitsschritt folgt, wird die angesaugte Luft in der Kompressoranordnung komprimiert. Dieser Schritt ist in Fig. 3 gezeigt. Eine Umkehrung der relativen Hubbewegung zwischen der Achse und dem Chassis des Fahrzeugs bewegt das Mitnehmerelement 150 in einer Richtung 300 entgegen der Hubrichtung 200 und die Verdickung 160 gibt das erste Element 110 frei. Durch den erhöhten Druck in dem Raum 220 (mit Unterstützung des Rückstellelementes 170) kann das erste Element 110 nun in der Richtung 300 seiner Ruhelage angenähert werden. Dabei wird die zuvor angesaugte Luft komprimiert. Sobald der Druck in dem Raum 220 eine gleiche Stärke wie der Druck in dem Luftvolumen zwischen dem ersten 110 und zweiten 120 Element aufweist, kann das Rückstellelement 170, das beispielsweise eine Schraubenfeder ist, beispielsweise eine Reibungskraft überwinden und das erste Element 110 vollständig in seine Ruhelage zurück drücken, so dass das Luftvolumen zwischen den Elementen 110 und 120 gegen Null tendiert und die komprimierte Luft in dem Luftvolumen als Druckluft aus dem Auslassventil 190 in einen Druckluftspeicher (der in Fig. 3 nicht gezeigt ist) ausgestoßen wird. Das Auslassventil 190 kann dabei zum Beispiel als automatisch wirkende Rückschlagventilanordnung, insbesondere als ein Lamellenventil ausgebildet sein.

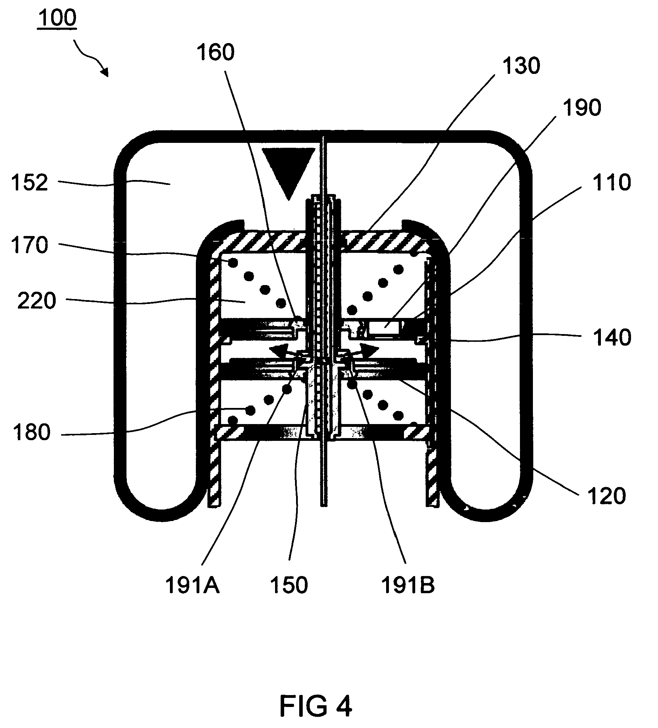

Eine Weiterführung der in Fig. 3 dargestellten Relativbewegung zwischen der Achse und dem Chassis des Fahrzeugs bewirkt eine Mitnahme des zweiten Elements 120 durch die Verdickung 160 des Mitnehmerelements 150, wie es in Fig. 4 gezeigt ist. Der in Fig. 2A und 3 beschriebene Bewegungsablauf erfolgt nun analog in entgegengesetzter Richtung, wodurch sowohl bei der Einfeder- als auch bei der Ausfederbewegung zwischen dem Chassis und der Achse eine Druckluftförderung möglich ist.

Das vorstehend genannte Ausführungsbeispiel verwendet dabei einen festen Zylinder als Führungselement mit zwei Kolben als erstem 110 und zweitem 120 Element. Die Funktionsweise dieses Ausführungsbeispiels wird im Folgenden in Aufbau und Funktion zusammenfassend nochmals zur besseren Verständlichkeit mit anderen Worten beschrieben:
In einem Zylinder 130, der - eventuell schwenkbar (was in den Figuren nicht dargestellt ist) - an Achse oder Chassis befestigt ist, befinden sich zwei Kolben 110 und 120. An einer Gegenseite (Chassis oder Achse) ist ein stabförmiges Element 150 - eventuell ebenfalls schwenkbar - befestigt, das in den Zylinder 130 ragt. Die Zylinderinnenwand besitzt etwa mittig einen Absatz 140, der den Weg des oberen Kolbens 110 nach unten und des unteren Kolbens 120 nach oben begrenzt, sodass sich für beide Kolben 110, 120 eine Nulllage bzw. Ruhelage ergibt, in der sie beide an diesem Absatz 140 anliegen. Die Kolben 110, 120 sind so gestaltet, dass sich in der Nulllage zwischen ihnen ein möglichst kleines Volumen befindet. Das stabförmige Element 150 durchstößt zumindest den ihm zugewandten Kolben 110 und weist eine Verdickung 160 auf, die zwischen den beiden Kolben 110, 120 angeordnet ist. Bewegt sich die Achse relativ zum Chassis, so bewegt sich auch das stabförmige Element 150 relativ zum Zylinder 130 und nimmt einen der Kolben 110, 120 mit. Dadurch wird das Volumen zwischen den beiden Kolben 110, 120 vergrößert. Durch eine Rückschlagventilanordnung 191 A, 191B - im Beispiel einen Gummiring mit radial wegklappbaren Lippen - wird Luft angesaugt. Bei der Gegenbewegung wird dieser Kolben von der Druckbeaufschlagung auf der dem anderen Kolben abgewandten Seite 220 mittels einer Feder 170 wieder in seine Nulllage zurückgedrückt, verdichtet dabei die zuvor angesaugte Luft und stößt sie schließlich über eine weitere Rückschlagventilanordnung 190 - hier ein Lamellenventil im Kolben 110 selbst - in den mit Druck zu beliefernden Raum 220 aus. Setzt sich die Relativbewegung weiter fort, so wird der andere Kolben 120 vom stabförmigen Element 150 mitgenommen, und der Vorgang wiederholt sich entsprechend mit dem anderen Kolben 120.

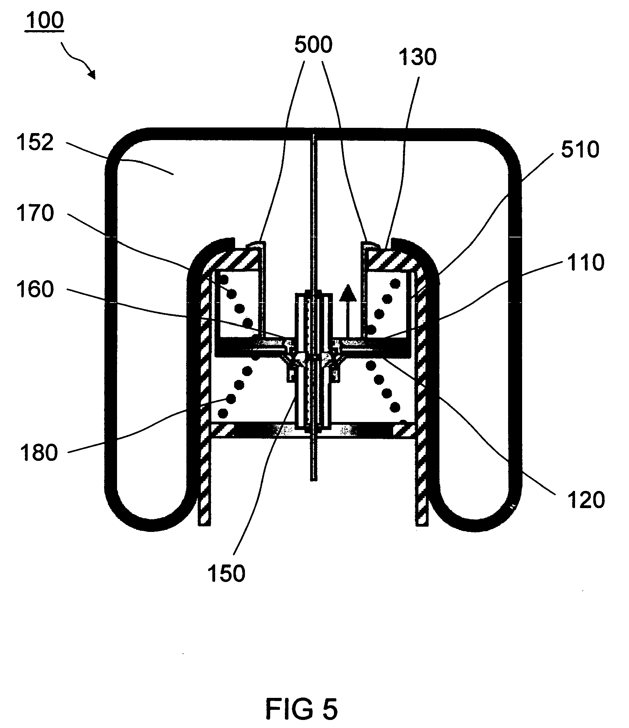

In Fig. 5 ist eine weitere Schnittansicht entlang einer Längsachse eines alternativen Ausführungsbeispiels des erfindungsgemäßen Dämpferkompressors dargestellt, wobei sich ein erstes 110 und ein zweites 120 Element einer Kompressoranordnung in einer Ruhelage befinden. Die Innenwand des Führungselements 130 weist hier keinen Absatz 140 auf. Das erste Element 110 ist als ein Zylinder ausgebildet, der eine Halteeinheit 500 aufweist. Die Halteeinheit 500 ist derart ausgestaltet, dass eine Wand des ersten Elements 110 das Führungselement durchstößt und eine Oberkante dieser Wand des ersten Elements 110 radial nach außen gebogen ist. Diese radial nach außen gebogene Oberkante liegt an einer oberen Außenwand des Führungselements 130 an. Das zweite Element 120 ist ebenfalls als ein Zylinder ausgebildet, der eine Wand 510 aufweist. In der Ruhelage ist das erste Element 110 innerhalb des zweiten Elements 120 angeordnet, wobei der Boden des ersten Elements 110 auf dem Boden des zweiten Elements 120 aufliegt. Die Ruhelage wird mittels der Rückhalteelemente 170 bzw. 180 erreicht, die auf das erste Element 110 bzw. das zweite Element 120 eine Druckkraft ausüben, welche jeweils bewirkt, dass die Halteeinheit 500 an einer Außenwand des Führungselements 130 anliegt und die (Zylinder-) Wand 510 des äußeren Zylinders an einer oberen Seite der Innenwand des Führungselements 130 anliegt.

Bei Fahrzeugen, bei denen durch die Art der Federung (z.B. Luftfederung) immer ein festes Fahrzeugniveau eingeregelt wird, kann auch die Nulllage des Dämpferkompressors konstruktiv fest vorgegeben sein. Für Fahrzeuge ohne eine solche automatische Regulierung des Fahrzeugniveaus es ist jedoch auch möglich, die Nulllage elektrisch aktiv zu steuern, beispielsweise indem über einen Spindeltrieb die Länge des stabförmigen Elements 150 variiert wird. Eine günstige Lösung zur Variation der Länge des stabförmigen (Mitnehmer-) Elementes 150 kann auch darin bestehen, dass ein hydraulisches Zwischenelement 600 verwendet wird, wie es bereits in den Figuren 1 bis 5 dargestellt ist, wobei sich die Länge des stabförmigen Elements 150 automatisch einstellt. Dieses Zwischenelement 600 besteht beispielsweise aus einem ölgefüllten Zylinder und einem Kolben mit einer kleinen Drosselöffnung. Die Drossel lässt nur sehr wenig Öl passieren, so dass hochfrequente Ein- und Ausfedervorgänge, wie sie beim Fahren vorkommen, nicht oder kaum zu einer Längenänderung führen, jedoch längere Zeit anstehende Verschiebungen des mittleren Abstands zwischen Achse und Chassis automatisch ausgeregelt werden, da die Kolben in Richtung der Nulllage vorgespannt sind und den Kolben 110 bzw. 120 sich auf dieser Weise durch den Druckausgleich im ölgefüllten Zylinder mittels der Drosselöffnung auf diese Weise langsam zur Null- bzw. Ruhelage hin bewegen.

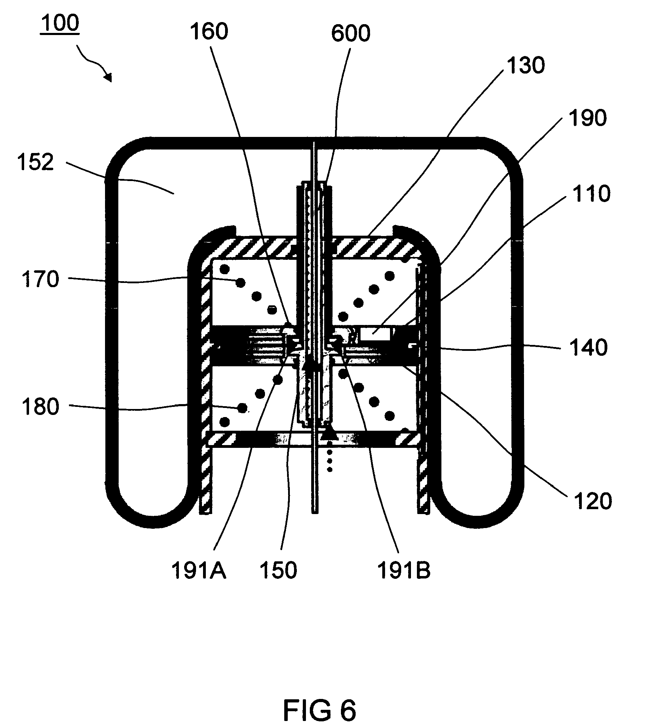

In Fig. 6 ist anhand eines Ausführungsbeispiels nochmals dargestellt, wie das stabförmige Element bzw. Mitnehmerelement 150 elektrisch aktiviert oder mit Hilfe eines hydraulischen Zwischenelements in seiner Länge angepasst (insbesondere entsprechend der Pfeilrichtungen verkürzt) wird.

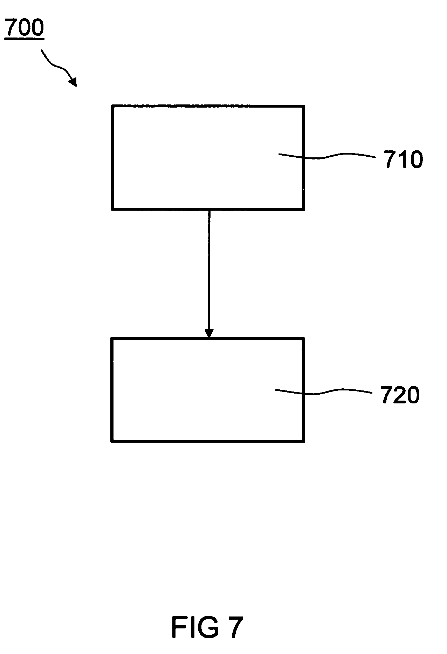

Ferner schafft die vorliegende Erfindung ein Verfahren 700 zum Erzeugen von Druckluft durch eine Dämpfung einer Relativbewegung zwischen einer Achse und einem Chassis eines Fahrzeugs, wobei ein Ablaufdiagramm eines Ausführungsbeispiels des Verfahrens in Fig. 7 näher dargestellt ist. Das Verfahren 700 umfasst einen ersten Schritt des Vergrößems 710 des Luftvolumens bei einer Relativbewegung zwischen der Achse und dem Chassis durch Mitnahme des ersten Elementes 110 in eine Hubrichtung. Weiterhin umfasst das Verfahren einen zweiten Schritt des Bewegens 720 des ersten Elementes 110 entgegen der Hubrichtung 200, wodurch eine Luftvolumenreduzierung bewirkt und die Druckluft aus der Kompressoranordnung 110, 120 ausgefördert wird.

### Bezugszeichenliste

- 100: Dämpferkompressor
- 110: erstes Element
- 120: zweites Element
- 130: Führungselement
- 140: Absatz
- 150: Mitnehmerelement
- 152: Federbalg
- 160: Verdickung
- 170: erstes Rückstellelement
- 180: zweites Rückstellelement
- 190: Auslassventil
- 200: Hubrichtung
- 191 A: erstes Einlassventil
- 191 B: zweites Einlassventil
- 220: Raum des Führungselements über dem ersten Element 110
- 300: Richtung entgegen der Hubrichtung
- 500: Halteeinheit
- 510: Zylinderwand
- 600: hydraulisches Zwischenelement
- 700: Verfahren zum Erzeugen von Druckluft
- 710: Schritt des Vergrößerns des Luftvolumens
- 720: Schritt des Bewegens des ersten Elementes entgegen der Hubrichtung

## Patentansprüche

1. Dämpferkompressor (100), der zum Erzeugen von Druckluft durch eine Dämpfung einer Relativbewegung zwischen einer Achse und einem Chassis eines Fahrzeugs ausgeformt ist, wobei der Dämpferkompressor (100) die folgenden Merkmale aufweist:
eine Kompressoranordnung, die ein erstes (110) und ein zweites (120) Element umfasst, wobei das erste Element (110) mit der Achse oder dem Chassis des Fahrzeugs verbindbar ist und das zweite Element (120) mit dem anderen des Chassis oder der Achse des Fahrzeugs verbindbar ist, wobei die Kompressoranordnung ausgeformt ist, um bei einer relativen Hubbewegung zwischen dem ersten (110) und zweiten (120) Element ein Luftvolumen zwischen diesen Elementen (110, 120) zu verändern, um die Druckluft zu erzeugen, wobei die Kompressoranordnung ferner in einer Ruhelage ein Minimum des Luftvolumens oder kein Luftvolumen zwischen den Elementen (110, 120) aufweist;
ein Mitnehmerelement (150), das ausgeformt ist, um bei einer Relativbewegung zwischen der Achse und dem Chassis durch Mitnahme des ersten Elementes (110) in eine Hubrichtung (200) eine Luftvolumenvergrößerung zu bewirken; und
ein Rückstellelement (170), das ausgeformt ist, um das erste Element (110) entgegen (300) der Hubrichtung (200) zu bewegen, wodurch eine Luftvolumenreduzierung bewirkt und die Druckluft aus der Kompressoranordnung ausgefördert wird.

2. Dämpferkompressor (100) gemäß Anspruch 1, **dadurch gekennzeichnet, dass** das Mitnehmerelement (150) ausgeformt ist, um bei einer weiteren Relativbewegung zwischen der Achse und dem Chassis durch Mitnahme des zweiten Elementes (120) in eine der Hubrichtung (200) entgegengesetzte Richtung (300) eine Luftvolumenvergrößerung zu bewirken wobei der Dämpferkompressor (100) ein weiteres Rückstellelement (180) aufweist, das ausgeformt ist, um das zweite Element (120) in die Hubrichtung (200) zu bewegen, wodurch eine Luftvolumenreduzierung bewirkt und die Druckluft aus der Kompressoranordnung ausgefördert wird.

3. Dämpferkompressor (100) gemäß einem der vorangegangenen Ansprüche, **dadurch gekennzeichnet, dass** das Mitnehmerelement (150) stabförmig mit einer Verdickung (160) ausgeformt ist, wobei die Verdickung (160) derart an dem stabförmigen Element angeordnet ist, dass die Verdickung (160) zwischen dem ersten (110) und zweiten (120) Element angeordnet ist.

4. Dämpferkompressor gemäß einem der vorangegangenen Ansprüche , **dadurch gekennzeichnet, dass** das Mitnehmerelement (150) zumindest durch das erste (110) und/oder zweite (120) Element durchgeführt ist.

5. Dämpferkompressor (100) gemäß einem der vorangegangenen Ansprüche, **dadurch gekennzeichnet, dass** das Rückstellelement (170) und/oder das weitere Rückstellelement (180) eine Feder ist.

6. Dämpferkompressor (100) gemäß einem der vorangegangenen Ansprüche , **dadurch gekennzeichnet, dass** der Dämpferkompressor (100) zumindest ein Einlassventil (191A, 191B) aufweist, das ausgeformt ist, um bei der relativen Hubbewegung Luft aus einer äußeren Umgebung des Dämpferkompressors (100) und/oder einem Luftbehälter, insbesondere einem Federbalg (152), in das Luftvolumen zwischen dem ersten (110) und zweiten (120) Element einzulassen.

7. Dämpferkompressor (100) gemäß einem der vorangegangenen Ansprüche, **dadurch gekennzeichnet, dass** der Dämpferkompressor (100) ein Auslassventil (190) in dem ersten (110) und/oder zweiten (120) Element aufweist, das ausgeformt ist, um die Druckluft in einen Druckluftspeicher auszustoßen.

8. Dämpferkompressor (100) gemäß Anspruch 7, **dadurch gekennzeichnet, dass** der Druckluftspeicher zur Bereitstellung von Druckluft ausgeformt ist, um das erste (110) Element entgegen (300) der Hubrichtung (200) zu bewegen und/oder das zweite Element (120) in Hubrichtung (200) zu bewegen, wodurch eine Luftvolumenreduzierung bewirkt und die Druckluft erzeugt wird.

9. Dämpferkompressor (100) gemäß einem der vorangegangenen Ansprüche, **dadurch gekennzeichnet, dass** das erste (110) und zweite (120) Element durch je einen Kolben gebildet wird.

10. Dämpferkompressor (100) gemäß Anspruch 9, **dadurch gekennzeichnet, dass** der Dämpfungskompressor (100) ein Führungselement (130) aufweist, das ausgeformt ist, um das erste (110) und zweite (120) Element bei einer Relativbewegung zwischen der Achse und dem Chassis aufzunehmen und zu führen, wobei das Führungselement (130) an einer Innenwand zumindest einen Absatz (140) aufweist, an dem das ersten (110) und zweite (120) Element in der Ruhelage anliegen.

11. Dämpferkompressor (100) gemäß einem der vorangegangenen Ansprüche, **dadurch gekennzeichnet, dass** das erste (110) und zweite (120) Element durch je einen Zylinder gebildet wird, wobei die Zylinder ineinander angeordnet sind und der Boden des innen angeordneten Zylinders als Kolben wirkt.

12. Dämpferkompressor (100) gemäß Anspruch 11, **dadurch gekennzeichnet, dass** der Dämpferkompressor ein Führungselement (130) aufweist, das ausgeformt ist, um das erste (110) und zweite (120) Element bei einer Relativbewegung zwischen der Achse und dem Chassis aufzunehmen und zu führen, wobei der innen angeordnete Zylinder eine Halteeinheit (500) aufweist, die ausgeformt ist, um an einer äußeren Oberfläche des Führungselements (130) aufzusetzen, um die Ruhelage des innen angeordneten Zylinders (110) zu definieren und wobei der außen angeordnete Zylinder (120) eine Zylinderwand (510) aufweist, die ausgeformt ist, um an einer Innenwand des Führungselements (130) aufzusetzen, um die Ruhelage des außen angeordneten Zylinders (120) zu definieren.

13. Dämpferkompressor (100) gemäß einem der vorangegangenen Ansprüche, **dadurch gekennzeichnet, dass** eine Länge des Mitnehmerelements (150), insbesondere durch einen elektrischen Spindeltrieb und/oder ein hydraulisches Zwischenelement (600) einstellbar ist.

14. Verfahren (700) zum Erzeugen von Druckluft durch eine Dämpfung einer Relativbewegung zwischen einer Achse und einem Chassis eines Fahrzeugs, wobei das Verfahren (700) eine Kompressoranordnung verwendet, die ein erstes (110) und ein zweites (120) Element umfasst, wobei das erste Element (110) mit der Achse oder dem Chassis des Fahrzeugs verbindbar ist und das zweite Element (120) mit dem anderen des Chassis oder der Achse des Fahrzeugs verbindbar ist, wobei die Kompressoranordnung ausgeformt ist, um bei einer relativen Hubbewegung zwischen dem ersten (110) und zweiten (120) Element ein Luftvolumen zwischen diesen Elementen (110, 120) zu verändern, um die Druckluft zu erzeugen, wobei die Kompressoranordnung ferner in einer Ruhelage ein Minimum des Luftvolumens oder kein Luftvolumen zwischen den Elementen (110, 120) aufweist, wobei das Verfahren (700) die folgenden Schritte umfasst:
Vergrößern (710) des Luftvolumens bei einer Relativbewegung zwischen der Achse und dem Chassis durch Mitnahme des ersten Elementes (110) in eine Hubrichtung (200); und
Bewegen (720) des ersten Elementes (110) entgegen (300) der Hubrichtung (200), wodurch eine Luftvolumenreduzierung bewirkt und die Druckluft aus der Kompressoranordnung ausgefördert wird.

## Claims

1. Damping compressor (100) designed to generate compressed air by damping a relative motion between an axle and a chassis of a vehicle, the damping compressor (100) having the following features:
a compressor arrangement which comprises a first element (110) and a second element (120), wherein the first element (110) can be connected to the axle or to the chassis of the vehicle, and the second element (120) can be connected to the other of the chassis or the axle of the vehicle, wherein the arrangement is designed, to change an air volume between the first element (110) and the second element (120) in order to generate the compressed air in the case of a relative stroke motion between these elements (110, 120), wherein the compressor arrangement further has a minimum of the air volume or no air volume between the elements (110, 120) in a position of rest;
a driver element (150) which is designed to bring about an increase in air volume in the case of a relative motion between the axle and the chassis by driving the first element (110) in a stroke direction (200); and
a restoring element (170) which is designed to move the first element (110) counter to (300) the stroke direction (200), as a result of which a reduction in the air volume is brought about and the compressed air is expelled from the compressor arrangement.

2. Damping compressor (100) according to claim 1, **characterised in that** the driver element (150) is designed to bring about an increase in the air volume in the case of a further relative motion between the axle and the chassis by driving the second element (120) in a direction (300) which is opposed to the stroke direction (200), wherein the damping compressor (100) has a further restoring element (180) which is designed to move the second element (120) in the stroke direction (200), as a result of which a reduction in the air volume is brought about and the compressed air is expelled from the compressor arrangement.

3. Damping compressor (100) according to any of the preceding claims, **characterised in that** the driver element (150) is embodied in a rod shape with a thickened portion (160), wherein the thickened portion (160) is arranged on the rod-shaped element in such a way that the thickened portion (160) is located between the first element (110) and the second element (120).

4. Damping compressor (100) according to any of the preceding claims, **characterised in that** the driver element (150) is routed through the first element (110) and/or the second element (120).

5. Damping compressor (100) according to any of the preceding claims, **characterised in that** the restoring element (170) and/or the further restoring element (180) is/are a spring.

6. Damping compressor (100) according to any of the preceding claims, **characterised in that** the damping compressor (100) has at least one inlet valve (191A, 191B) which is designed to let air flow, during the relative stroke motion, from external surroundings of the damping compressor (100) and/or from an air reservoir, in particular a spring bellows (152), into the air volume between the first element (110) and the second element (120).

7. Damping compressor (100) according to any of the preceding claims, **characterised in that** the damping compressor (100) has an outlet valve (190) in the first element (110) and/or in the second element (120), which outlet valve (190) is designed to eject the compressed air into an air accumulator.

8. Damping compressor (100) according to claim 7, **characterised in that** the air accumulator is designed to make available compressed air in order to move the first element (110) counter (300) to the stroke direction (200) and/or to move the second element (120) in the stroke direction (200), as a result of which a reduction in air volume is brought about and the compressed air is generated.

9. Damping compressor (100) according to any of the preceding claims, **characterised in that** the first element (110) and the second element (120) are each represented by a piston.

10. Damping compressor (100) according to claim 9, **characterised in that** the damping compressor (100) has a guide element (130) which is designed to receive and to guide the first element (110) and the second element (120) during a relative motion between the axle and the chassis, wherein the guide element (130) has at least one shoulder (140) on an inner wall, against which shoulder (140) the first element (110) and the second element (120) bear in the position of rest.

11. Damping compressor (100) according to any of the preceding claims, **characterised in that** the first element (110) and the second element (120) are each represented by a cylinder, wherein the cylinders are arranged one in the other and the bottom of the cylinder which is arranged on the inside acts as a piston.

12. Damping compressor (100) according to claim 11, **characterised in that** the damping compressor has a guide element (130) which is designed to receive and to guide the first element (110) and the second element (120) during a relative motion between the axle and the chassis, wherein the cylinder which is arranged on the inside has a holding unit (500) which is designed to fit onto an outer surface of the guide element (130) in order to define the position of rest of the cylinder (110) which is arranged on the inside, and wherein the cylinder (120) which is arranged on the outside has a cylinder wall (510) which is designed to fit on an inner wall of the guide element (130) in order to define the position of rest of the cylinder (120) which is arranged on the outside.

13. Damping compressor (100) according to any of the preceding claims, **characterised in that** a length of the driver element (150) can be adjusted, in particular by means of an electric spindle drive and/or a hydraulic intermediate element (600).

14. Method (700) for generating compressed air by damping a relative motion between an axle and a chassis of a vehicle, wherein the method (700) uses a compressor arrangement which comprises a first element (110) and a second element (120), wherein the first element (110) can be connected to the axle or the chassis of the vehicle, and the second element (120) can be connected to the other of the chassis or the axle of the vehicle, wherein the compressor arrangement is designed to change an air volume between the first element (110) and the second element (120) in order to generate the compressed air in the case of a relative stroke motion between these elements (110, 120), wherein the compressor arrangement further has a minimum of the air volume or no air volume between the elements (110, 120) in a position of rest, the method (700) comprising the following steps:
increasing (710) the air volume in the case of a relative motion between the axle and the chassis by driving the first element (110) in a stroke direction (200); and
moving (720) the first element (110) counter (300) to the stroke direction (200), as a result of which a reduction in the air volume is brought about and the compressed air is discharged from the compressor arrangement.

## Revendications

1. Compresseur (100) d'amortisseur, qui est conformé pour produire de l'air comprimé par un amortissement d'un déplacement relatif entre un essieu et un châssis d'un véhicule, le compresseur (100) d'amortisseur ayant les caractéristiques suivantes :
un agencement de compresseur, qui comprend un premier (110) et un deuxième (120) élément, le premier élément (110) pouvant être relié à l'essieu ou au châssis du véhicule et le deuxième élément (120) à l'autre du châssis ou de l'essieu du véhicule, l'agencement de compresseur étant conformé pour modifier, par une course de déplacement relatif entre le premier (110) et le deuxième (120) éléments, un volume d'air entre ces éléments (110, 120) afin de produire l'air comprimé, l'agencement de compresseur ayant, en outre, en une position de repos, un minimum du volume d'air ou pas de volume d'air entre les éléments (110, 120) ;
un élément (150) d'entraîneur, qui est conformé pour provoquer, lors d'un déplacement relatif entre l'essieu et le châssis, par entraînement du premier élément (110) dans un sens (200) de course, un agrandissement du volume d'air, et
un élément (170) de rappel, qui est conformé pour déplacer le premier élément (110) dans le sens (300) contraire au sens (200) de course, en provoquant une réduction du volume d'air et en refoulant l'air comprimé de l'agencement de compresseur.

2. Compresseur (100) d'amortisseur suivant la revendication 1, **caractérisé en ce que** l'élément (150) d'entraîneur est conformé pour provoquer, lors d'un autre déplacement relatif entre l'essieu et le châssis, par entraînement du deuxième élément (120) dans un sens (300) contraire au sens (200) de course, un agrandissement du volume d'air, le compresseur (100) d'amortisseur ayant un autre élément (180) de rappel, conformé pour déplacer un deuxième élément (120) dans le sens (200) de course, en provoquant une réduction du volume d'air et en refoulant l'air comprimé de l'agencement de compresseur.

3. Compresseur (100) d'amortisseur suivant l'une des revendications précédentes, **caractérisé en ce que** l'élément (150) d'entraîneur est conformé en barreau ayant un épaississement (160), l'épaississement (160) étant disposé sur l'élément en barreau de manière à se trouver entre le premier (110) et le deuxième (120) éléments.

4. Compresseur (100) d'amortisseur suivant l'une des revendications précédentes, **caractérisé en ce que** l'élément (150) d'entraîneur est réalisé au moins par le premier (110) et/ou le deuxième (120) élément.

5. Compresseur (100) d'amortisseur suivant l'une des revendications précédentes, **caractérisé en ce que** l'élément (170) de rappel et/ou l'autre élément (180) de rappel est un ressort.

6. Compresseur (100) d'amortisseur suivant l'une des revendications précédentes, **caractérisé en ce que** le compresseur (100) d'amortisseur a au moins une soupape (191A, 191B) d'admission, conformée pour admettre, lors du déplacement de course relatif, de l'air d'une atmosphère extérieure au compresseur (100) d'amortisseur et/ou d'un réservoir d'air, notamment d'un soufflet (152) élastique, dans le volume d'air entre le premier (110) et le deuxième (120) élément.

7. Compresseur (100) d'amortisseur suivant l'une des revendications précédentes, **caractérisé en ce que** le compresseur (100) d'amortisseur a une soupape (190) de sortie dans le premier (110) et/ou dans le deuxième (120) élément, conformée pour refouler l'air comprimé dans un accumulateur d'air comprimé.

8. Compresseur (100) d'amortisseur suivant la revendication 7, **caractérisé en ce que** l'accumulateur d'air comprimé est, pour la mise à disposition d'air comprimé, conformé pour déplacer le premier (110) élément dans le sens (300) contraire au sens (200) de course et/ou le deuxième élément (120) dans le sens (200) de course, en provoquant ainsi une réduction du volume d'air et en produisant l'air comprimé.

9. Compresseur (100) d'amortisseur suivant l'une des revendications précédentes, **caractérisé en ce que**, entre le premier (110) et le deuxième (120) élément sont formés chacun par un piston.

10. Compresseur (100) d'amortisseur suivant la revendication 9, **caractérisé en ce que** le compresseur (100) d'amortisseur a un élément (130) de guidage, conformé pour recevoir et pour guider le premier (110) et le deuxième (120) éléments lors d'un déplacement relatif entre l'essieu et le châssis, l'élément (130) de guidage ayant, sur une paroi intérieure, au moins un ressaut (140) sur lequel s'applique le premier (110) et le deuxième (120) éléments en la position de repos.

11. Compresseur (100) d'amortisseur suivant l'une des revendications précédentes, **caractérisé en ce que**, le premier (110) et le deuxième (120) élément sont formés chacun par un cylindre, les cylindres entrant l'un dans l'autre et le fond du cylindre intérieur servant de piston.

12. Compresseur (100) d'amortisseur suivant la revendication 11, **caractérisé en ce que** le compresseur d'amortisseur a un élément (130) de guidage, conformé pour recevoir et pour guider le premier (110)et le deuxième (120) élément lors d'un déplacement relatif entre l'essieu et le châssis, le cylindre intérieur ayant une unité (500) de maintien, conformée pour se mettre sur une surface extérieure de l'élément (130) de guidage afin de définir la position de repos du cylindre (110) intérieur et le cylindre (120) extérieur ayant une paroi (510) conformée pour se mettre sur une paroi intérieure de l'élément (130) de guidage, afin de définir la position de repos du cylindre (120) extérieur.

13. Compresseur (100) d'amortisseur suivant l'une des revendications précédentes, **caractérisé en ce qu'**une longueur de l'élément (150) d'entraîneur est réglable, notamment par un entraînement à broche électrique et/ou par un élément (600) intermédiaire hydraulique.

14. Procédé (700) de production d'air comprimé par un amortissement d'un déplacement relatif entre un essieu et un châssis d'un véhicule, le procédé utilisant un agencement de compresseur qui comprend un premier (110) et un deuxième (120) élément, le premier élément (110) pouvant être relié à l'essieu ou au châssis du véhicule, et le deuxième élément (120) à l'autre du châssis ou de l'essieu du véhicule, l'agencement de compresseur étant conformé pour modifier, lors d'un déplacement de course relatif entre le premier (110) et le deuxième (120) élément, un volume d'air entre ces éléments (110, 120), afin de produire de l'air comprimé, l'agencement de compresseur comprenant, en outre, dans une position de repos, un minimum du volume d'air ou pas de volume d'air entre les éléments (110, 120), le procédé (700) comprenant les stades suivants :
agrandissement (710) du volume d'air lors d'un déplacement relatif entre l'essieu et le châssis, par entraînement du premier élément (110) dans un sens (200) de course, et
déplacement (720) du premier élément (110) dans le sens (300) contraire au sens (200) de course, en provoquant une réduction du volume d'air et en refoulant l'air comprimé de l'agencement de compresseur.
